# EUROPEAN PATENT APPLICATION

(11) **EP 4 579 608 A1**
(43) Date of publication of application: **02.07.2025**
(21) Application number: 23856987.5
(22) Date of filing: 04.07.2023
(51) Int. Cl.: G06V 10/44, G06V 10/82, G06V 20/52, G06V 40/10, H04N 23/611, G06V 10/25, G06T 7/215, H04N 23/617, H04N 23/68, H04N 23/80, G06V 10/94, G06N 3/045

(54) **IMAGE PROCESSING DEVICE**

(30) Priority: 24.08.2022 JP 2022132956
(71) Applicant: Sony Semiconductor Solutions Corporation, Atsugi-shi, Kanagawa 243-0014 (JP)
(72) Inventor: MATSUDA, Kohei, Atsugi-shi, Kanagawa 243-0014 (JP); HANZAWA, Katsuhiko, Atsugi-shi, Kanagawa 243-0014 (JP); MOTOMURA, Masato, Tokyo 152-8550 (JP); YU, Jaehoon, Tokyo 152-8550 (JP)
(74) Representative: Müller Hoffmann & Partner
(86) International application number: PCT/JP2023/024734
(87) International publication number: WO 2024/042870

(57) **Abstract**

An image processing device according to an embodiment of the present disclosure includes: a region setting section that is configured to set an operation target region on the basis of a piece of flag data that indicates a region to be processed and a region not to be processed in an image region indicated by a piece of image data, the operation target region being an image region that has to be processed in the image region indicated by the piece of image data; and a convolution operation section that is configured to perform a convolution operation in the operation target region on the basis of the piece of image data and a piece of first weighting coefficient data.

## Description

### Technical Field

The present disclosure relates to an image processing device that performs processing using a neural network.

### Background Art

An image processing device frequently performs a convolution operation using a neural network. For example, PTL 1 discloses an identification device that includes a classifier in order to achieve reduction in operation amount. The classifier performs determination on each of a plurality of pieces of partial data obtained from a piece of intermediate data as to whether or not to continue operation processing.

### Citation List

### Patent Literature

PTL 1: Japanese Unexamined Patent Application Publication No. 2019-200648

### Summary of the Invention

As described above, in an image processing device, reduction in operation amount is desired, and it is expected to further reduce the operation amount.

It is desirable to provide an image processing device that makes it possible to reduce an operation amount.

An image processing device according to one embodiment of the present disclosure includes a region setting section and a convolution operation section. The region setting section is configured to set an operation target region on the basis of a piece of flag data that indicates a region to be processed and a region not to be processed in an image region indicated by a piece of image data. The operation target region is an image region that has to be processed in the image region indicated by the piece of image data. The convolution operation section is configured to perform a convolution operation in the operation target region on the basis of the piece of image data and a piece of first weighting coefficient data.

In the image processing device according to one embodiment of the present disclosure, the region setting section sets the operation target region on the basis of the piece of flag data that indicates the region to be processed and the region not to be processed in the image region indicated by the piece of image data. The operation target region is the image region that has to be processed in the image region indicated by the piece of image data. Thereafter, the convolution operation section performs the convolution operation in the operation target region on the basis of the piece of image data and the piece of first weighting coefficient data.

### Brief Description of Drawings

[FIG. 1] FIG. 1 is a block diagram illustrating a configuration example of an imaging device according to an embodiment of the present disclosure.
[FIG. 2] FIG. 2 is a block diagram illustrating a configuration example of an imaging section illustrated in FIG. 1.
[FIG. 3] FIG. 3 is an explanatory diagram illustrating an example of a piece of image data illustrated in FIG. 1.
[FIG. 4] FIG. 4 is an explanatory diagram illustrating another example of the piece of image data illustrated in FIG. 1.
[FIG. 5] FIG. 5 is an explanatory diagram illustrating an example of a piece of mask data illustrated in FIG. 1.
[FIG. 6] FIG. 6 is an explanatory diagram illustrating another example of the piece of mask data illustrated in FIG. 1.
[FIG. 7] FIG. 7 is an explanatory diagram illustrating an operation example of a recognition processor illustrated in FIG. 1.
[FIG. 8] FIG. 8 is an explanatory diagram illustrating an operation example of a convolution operation to be performed by a convolution operation section illustrated in FIG. 1.
[FIG. 9] FIG. 9 is an explanatory diagram illustrating an operation example of a region setting section illustrated in FIG. 1.
[FIG. 10] FIG. 10 is an explanatory diagram illustrating an example of writing of a model parameter and an operation parameter to the imaging device illustrated in FIG. 1.
[FIG. 11] FIG. 12 is an explanatory diagram illustrating an implementation example of the imaging device illustrated in FIG. 1.
[FIG. 12] FIG. 12 is an explanatory diagram illustrating a layout example of respective circuits on semiconductor substrates illustrated in FIG. 11.
[FIG. 13] FIG. 13 is an explanatory diagram illustrating an operation example of the imaging device illustrated in FIG. 1.
[FIG. 14] FIG. 14 is another explanatory diagram illustrating an operation example of the imaging device illustrated in FIG. 1.
[FIG. 15] FIG. 15 is an explanatory diagram illustrating an operation example of the region setting section illustrated in FIG. 1.
[FIG. 16] FIG. 16 is an explanatory diagram illustrating a configuration example of a pixel array illustrated in FIG. 1.
[FIG. 17] FIG. 17 is an explanatory diagram illustrating another configuration example of a pixel array according to a modification example.
[FIG. 18] FIG. 18 is an explanatory diagram illustrating another configuration example of a pixel array according to another modification example.
[FIG. 19] FIG. 19 is an explanatory diagram illustrating another configuration example of a pixel array according to another modification example.
[FIG. 20] FIG. 20 is an explanatory diagram illustrating another configuration example of a pixel array according to another modification example.
[FIG. 21] FIG. 21 is a block diagram illustrating a configuration example of a recognition processing device according to another modification example.
[FIG. 22] FIG. 22 is a block diagram illustrating a configuration example of a recognition processing device according to another modification example.
[FIG. 23] FIG. 23 is a block diagram illustrating a configuration example of a recognition processing device according to another modification example.
[FIG. 24] FIG. 24 is a block diagram illustrating a configuration example of a recognition processing device according to another modification example.

### Modes for Carrying Out the Invention

In the following, some embodiments of the present disclosure are described in detail with reference to the drawings.

### <Embodiment>

### [Configuration Example]

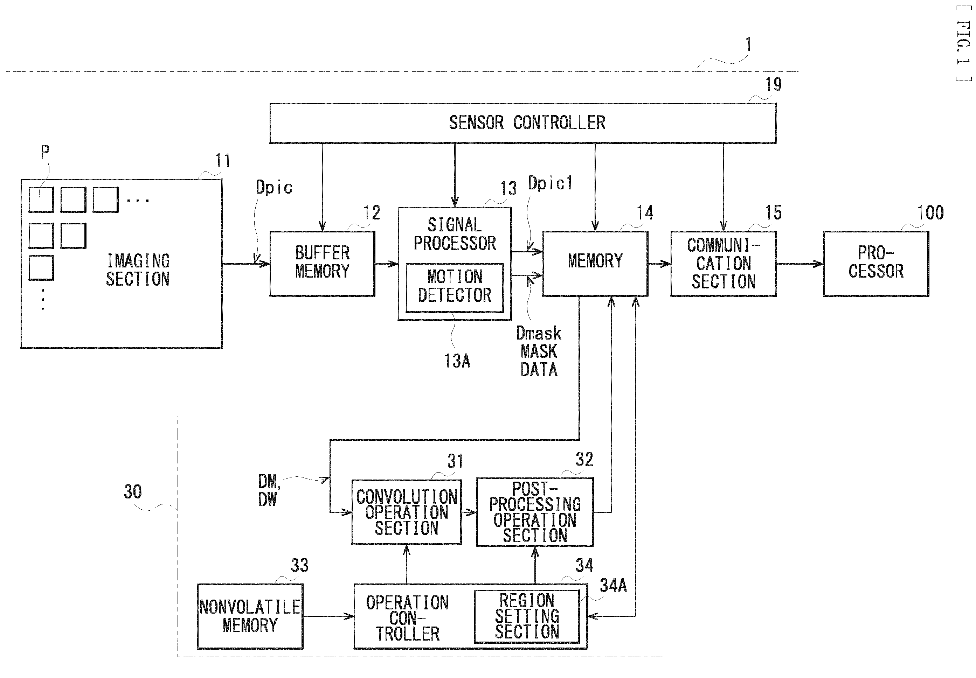

FIG. 1 illustrates a configuration example of an imaging processing device (an imaging device 1) according to an embodiment. The imaging device 1 images a subject and performs recognition processing on the basis of a result of the imaging. The imaging device 1 includes an imaging section 11, a buffer memory 12, a signal processor 13, a memory 14, a communication section 15, a sensor controller 19, and a recognition processor 30.

The imaging section 11 is configured to perform an imaging operation of imaging a subject and output a result of the imaging as a piece of image data Dpic.

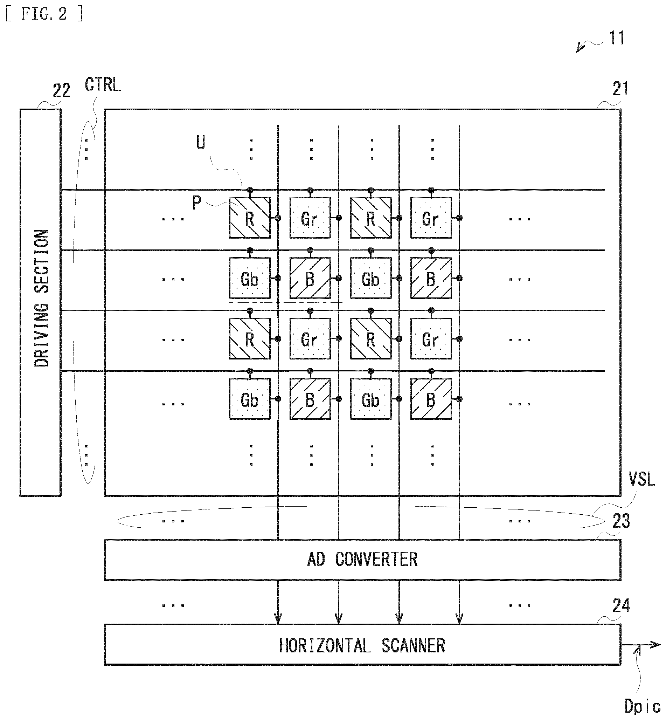

FIG. 2 illustrates a configuration example of the imaging section 11. The imaging section 11 includes a pixel array 21, a driving section 22, an AD (Analog to Digital) converter 23, and a horizontal scanner 24.

The pixel array 21 includes a plurality of control lines CTRL, a plurality of signal lines VSL, and a plurality of light-receiving pixels P. The plurality of control lines CTRL is provided to extend in a lateral direction (a horizontal direction) in FIG. 2. The plurality of control lines CTRL each has one end coupled to the driving section 22. The plurality of signal lines VSL is provided to extend in a longitudinal direction (a vertical direction) in FIG. 2. The plurality of signal lines VSL each has one end coupled to the AD converter 23. The plurality of light-receiving pixels P is arranged in a matrix in the pixel array 21. The plurality of light-receiving pixels P includes a light-receiving pixel provided with a red (R) color filter, light-receiving pixels provided with green (Gr and Gb) color filters, and a light-receiving pixel provided with a blue (B) color filter. In the pixel array 21, the plurality of light-receiving pixels P is arranged in units U of four light-receiving pixels P. The four light-receiving pixels P in the unit U are arranged in two rows and two columns. In this unit U, the light-receiving pixel P provided with the red (R) color filter is provided at the upper left, the light-receiving pixel P provided with the green (Gr) color filter is provided at the upper right, the light-receiving pixel P provided with the green (Gb) color filter is provided at the lower left, and the light-receiving pixel P provided with the blue (B) color filter is provided at the lower right. In this way, the light-receiving pixels P are arranged in what is called a Bayer arrangement. Each of the plurality of light-receiving pixels P is coupled to the control line CTRL, and is coupled to the signal line VSL. The light-receiving pixels P each operate on the basis of a control signal supplied via the control line CTRL, and each output a pixel signal including a pixel voltage corresponding to an amount of received light to the signal line VSL.

The AD converter 23 is configured to convert pixel voltages corresponding to the amount of received light into pixel values corresponding to the amount of received light by performing AD conversion on the basis of a plurality of pixel signals supplied from the pixel array 21 via the plurality of signal lines VSL. The AD converter 23 converts pixel voltages related to the light-receiving pixels P for one row supplied from the pixel array 21 into pixel values related to the light-receiving pixels P for one row, and supplies the pixel values related to the light-receiving pixels P for one row to the horizontal scanner 24. The AD converter 23 repeats this operation to thereby generate pixel values of all the light-receiving pixels P in the pixel array.

The horizontal scanner 24 is configured to sequentially output the pixel values related to the light-receiving pixels P for one row supplied from the AD converter 23 by performing a scanning operation. The horizontal scanner 24 repeats this operation to thereby output the pixel values of all the light-receiving pixels P in the pixel array 21 as the piece of image data Dpic.

With such a configuration, the imaging section 11 performs an imaging operation and outputs a result of the imaging as the piece of image data Dpic.

The buffer memory 12 (FIG. 1) is configured to temporarily store the piece of image data Dpic supplied from the imaging section 11.

The signal processor 13 is configured to generate a piece of image data Dpic1 and a piece of mask data Dmask on the basis of the piece of image data Dpic supplied from the buffer memory 12. Specifically, the signal processor 13 performs, for example, various types of image processing such as demosaic processing, noise removal processing or black level adjustment processing on the piece of image data Dpic to thereby generate the piece of image data Dpic1, and generate the piece of mask data Dmask on the basis of the piece of image data Dpic.

The signal processor 13 includes a motion detector 13A. The motion detector 13A is configured to detect motion of a subject. Specifically, the motion detector 13A detects motion of the subject, for example, by comparing a latest image with a past image. The motion detector 13A segments an image region of the piece of image data Dpic1 into a plurality of regions (segmented regions A), and detects motion of the subject in each of the plurality of segmented regions A. Thereafter, the motion detector 13A sets a flag F to "1" in a certain segmented region A in which the subject is moving among the plurality of segmented regions A, and sets the flag F to "0" in the segmented region A in which no subject is moving among the plurality of segmented regions A. Thereafter, the signal processor 13 generates the piece of mask data Dmask including a piece of map data about the flags F in the plurality of segmented regions A.

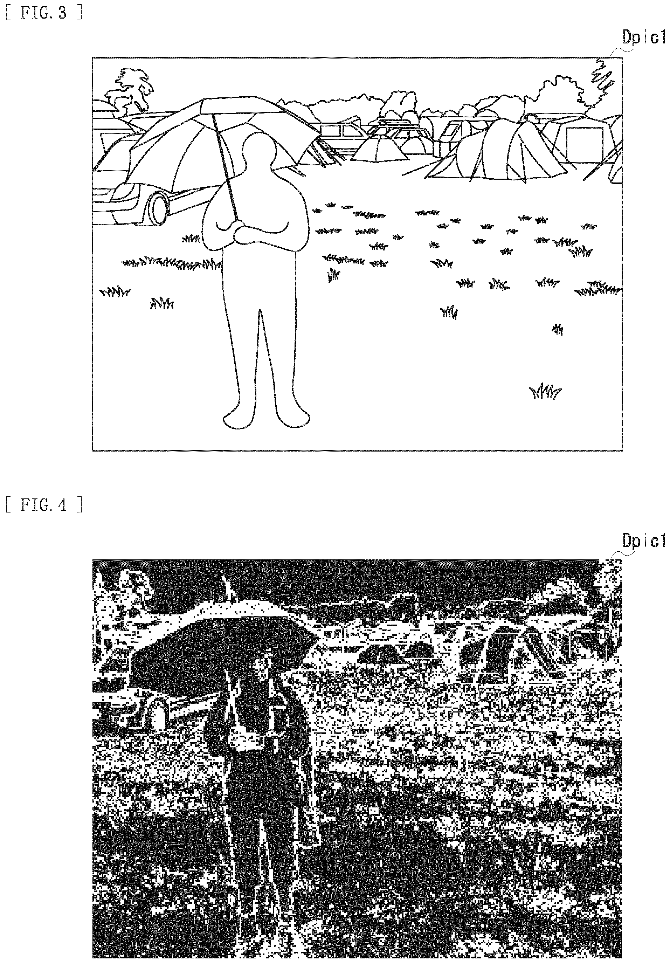

FIG. 3 illustrates an example of an image indicated by the piece of image data Dpic1. In this example, the image has resolution of 320 × 240. It is to be noted that the resolution of the image is not limited to this resolution, and may be higher than this resolution or may be lower than this resolution. The image may be a color image or a gray-scale image. The color image may be, for example, an RGB image including a red image, a green image, and a blue image, or a CMYK image including a cyan image, a magenta image, a yellow image, and a black image. In addition, the image may be an image before being subjected to demosaic processing, that is, what is called a RAW image. In addition, the image may be, for example, what is called an edge image, as illustrated in FIG. 4. The edge image has a large pixel value in a region around an outline of the subject and has a small pixel value in a region other than the region around the outline of the subject.

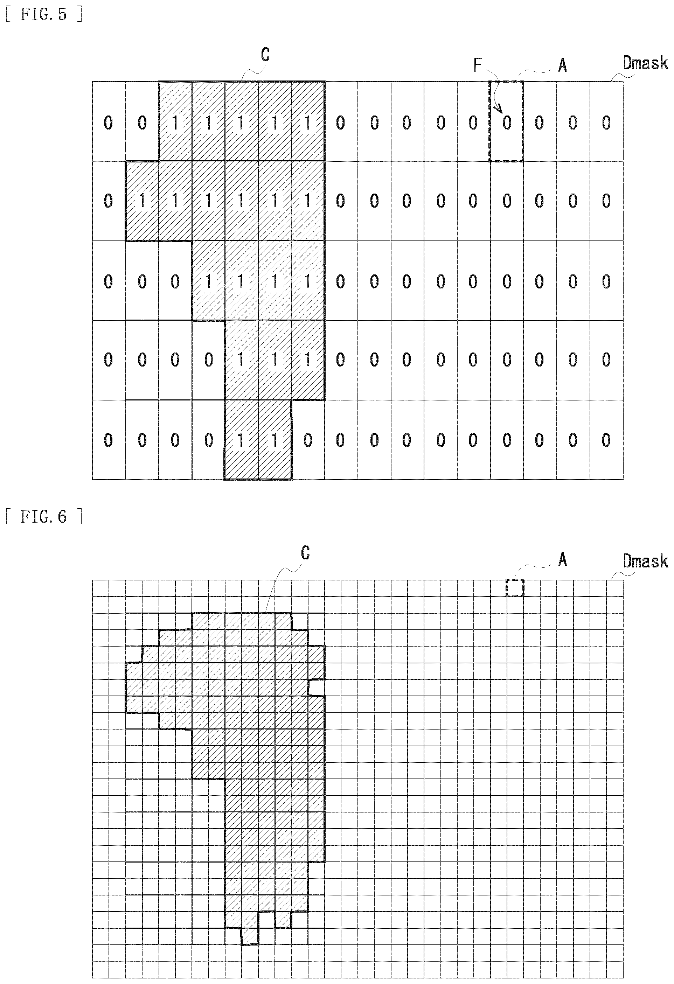

FIG. 5 illustrates an example of the piece of mask data Dmask. A size of the piece of mask data Dmask corresponds to a size of the piece of image data Dpic1 (FIGs. 3 and 4). In the example in FIG. 5, the image region of the piece of image data Dpic1 is segmented into 80 segmented regions A: sixteen segmented regions A in the lateral direction (the horizontal direction) by five segmented regions A in the longitudinal direction (the vertical direction). In this example, the image indicated by the piece of image data Dpic1 has a size of 320 pixels in the lateral direction by 240 pixels in the longitudinal direction; therefore, the segmented region A has a size of 20 pixels in the lateral direction by 48 pixels in the longitudinal direction. That is, in this example, the segmented region A is a vertically long region. In FIG. 5, the value of the flag F in each of the plurality of segmented regions A is written in that segmented region A. In FIG. 5, a region in which the flag F is set to "1" is shaded. In this example, a person in the image illustrated in FIGs. 3 and 4 is slightly moving; therefore, the flags F in a plurality of segmented regions A corresponding to the person are set to " 1", and the flags F in a plurality of segmented regions A other than the plurality of segmented regions A corresponding to the person are set to "0".

FIG. 6 illustrates another example of the piece of mask data Dmask. In the example in FIG. 6, the image region of the piece of image data Dpic1 is segmented into segmented into 768 segmented regions A: 32 segmented regions A in the lateral direction (the horizontal direction) by 24 segmented regions A in the longitudinal direction (the vertical direction). In this example, the image indicated by the piece of image data Dpic1 has a size of 320 pixels in the lateral direction by 240 pixels in the longitudinal direction; therefore, the segmented region A has a size of ten pixels in the lateral direction by ten pixels in the longitudinal direction. That is, in this example, the segmented region A is a square region. In this example also, as with the example in FIG. 5, a region in which the flag F is set to "1" is shaded. In this example also, the flags F in a plurality of segmented regions A corresponding to the person in the image illustrated in FIGs. 3 and 4 are set to "1", and the flags F in a plurality of segmented regions A other than the plurality of segmented regions A corresponding to the person are set to "0".

In this way, the signal processor 13 generates the piece of mask data Dmask. As will be described later, the recognition processor 30 performs recognition processing on a region (an operation target region C) in which the flag F is set to " 1" among the plurality of segmented regions A on the basis of the piece of mask data Dmask.

The memory 14 (FIG. 1) is configured to store a piece of data to be processed in the imaging device 1. The memory 14 includes, for example, a DRAM (Dynamic Random Access Memory), a SRAM (Static Random Access Memory), or the like. The memory 14 stores, for example, the piece of image data Dpic1 and the piece of mask data Dmask that are supplied from the signal processor 13. In addition, the memory 14 stores a piece of data DM (to be described later) and a piece of weighting coefficient data DW (to be described later) that are to be used when the recognition processor 30 performs recognition processing. Thereafter, the memory 14 supplies, to the communication section 15, the piece of image data Dpic1 and a piece of data indicating a processing result of recognition processing.

The recognition processor 30 is configured to perform recognition processing using a neural network on the basis of a piece of data stored in the memory 14. The recognition processor 30 performs recognition processing in the operation target region C indicated by the piece of mask data Dmask.

The recognition processor 30 is configured to perform, for example, object recognition processing for classifying an object included in the subject. In addition, the recognition processor 30 may detect a position of each subject in a three-dimensional space. In addition, the recognition processor 30 may perform recognition processing with use of semantic segmentation technology.

For example, in a case where this imaging device 1 is applied to a monitoring system, the recognition processor 30 is configured to perform recognition processing on an image region of a person or an animal in the image region of the piece of image data Dpic1. The recognition processor 30 is configured to classify an object into a human or an animal by performing the object recognition processing. In addition, the recognition processor 30 is configured to confirm whether or not a person is in an off-limits area, for example, by detecting the position of each subject in the three-dimensional space. In addition, the recognition processor 30 is configured to recognize, for example, a part such as an arm or a leg of the person by performing recognition processing with use of semantic segmentation technology, which makes it possible to confirm a more specific action of the person.

The communication section 15 is configured to transmit, to a processor 100, the piece of image data and the piece of data indicating the processing result of recognition processing that are supplied from the memory 14.

The sensor controller 19 is configured to control operations of the buffer memory 12, the signal processor 13, the memory 14, and the communication section 15.

The processor 100 is configured to perform predetermined processing on the basis of the piece of image data and the processing result of recognition processing that are supplied from the imaging device 1.

### (Recognition Processor 30)

The recognition processor 30 includes a convolution operation section 31, a post-processing operation section 32, a nonvolatile memory 33, and an operation controller 34. The recognition processor 30 includes, for example, a microcontroller.

The convolution operation section 31 is configured to perform a convolution operation CONV using the neural network on the basis of an instruction from the operation controller 34. The convolution operation section 31 performs the convolution operation CONV in the operation target region C indicated by the piece of mask data Dmask on the basis of the piece of data DM and the piece of weighting coefficient data DW that are supplied from the memory 14.

The post-processing operation section 32 is configured to perform a predetermined post-processing operation POST including a quantization operation and the like on a result of the operation by the convolution operation section 31 on the basis of an instruction from the operation controller 34. Thereafter, the post-processing operation section 32 stores a result of processing as the piece of data DM in the memory 14.

The nonvolatile memory 33 includes, for example, a flash memory, and is configured to store a model parameter of the neural network and an operation parameter. The model parameter is to be used in recognition processing in the recognition processor 30, and the operation parameter is to be used in an update operation of the piece of mask data Dmask. The model parameter and the operation parameter are created with use of, for example, a software development kit (SDK: Software Development Kit), and are stored in this nonvolatile memory 33 in advance.

The operation controller 34 is configured to control recognition processing in the recognition processor 30 by controlling operations of the convolution operation section 31 and the post-processing operation section 32, on the basis of the model parameter and the operation parameter that are supplied from the nonvolatile memory 33, and the piece of mask data Dmask supplied from the memory 14. The operation controller 34 stores the piece of weighting coefficient data DW included in the model parameter in the memory 14. In addition, the operation controller 34 also performs a function of supplying a write address when writing the piece of data DM and the piece of weighting coefficient data DW to the memory 14, and a readout address when reading the piece of data DM and the piece of weighting coefficient data DW from the memory 14.

The operation controller 34 includes a region setting section 34A. The region setting section 34A is configured to update the piece of mask data Dmask on the basis of the operation parameter supplied from the nonvolatile memory 33. For example, the region setting section 34A combines the flags F in two or more of segmented regions A in the piece of mask data Dmask into one flag F in accordance with the convolution operation CONV by the convolution operation section 31 to thereby update the piece of mask data Dmask. Specifically, as will be described later, for example, in a case where the convolution operation section 31 performs the convolution operation using a 2×2 kernel, the region setting section 34A combines the flags F in four (2 × 2) segmented regions A in the piece of mask data Dmask into one flag F to thereby update the piece of mask data Dmask.

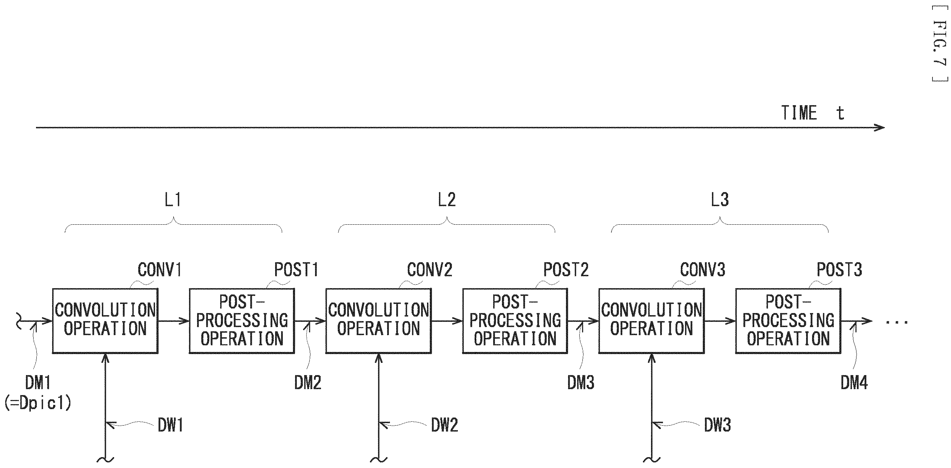

FIG. 7 illustrates an operation example of the recognition processor 30. In the recognition processor 30, the convolution operation section 31 and the post-processing operation section 32 alternately perform operations. Specifically, in this example, the convolution operation section 31 first performs, on the piece of data DM (a piece of data DM1) supplied from the memory 14, a convolution operation CONV1 using the piece of weighting coefficient data DW (a piece of weighting coefficient data DW1) supplied from the memory 14. The piece of data DM1 in this example is the piece of image data Dpic1 supplied from the memory 14. The post-processing operation section 32 performs a post-processing operation POST1 on an operation result of the convolution operation CONV1, and writes the operation result as the piece of data DM (a piece of data DM2) to the memory 14. The convolution operation CONV1 and the post-processing operation POST1 correspond to a layer L1. Next, the convolution operation section 31 performs, on the piece of data DM2 supplied from the memory 14, a convolution operation CONV2 using the piece of weighting coefficient data DW (a piece of weighting coefficient data DW2) supplied from the memory 14. The post-processing operation section 32 performs a post-processing operation POST2 on an operation result of the convolution operation CONV2, and writes the operation result as the piece of data DM (a piece of data DM3) to the memory 14. The convolution operation CONV2 and the post-processing operation POST2 correspond to a layer L2, Next, the convolution operation section 31 performs, on the piece of data DM3 supplied from the memory 14, a convolution operation CONV3 using the piece of weighting coefficient data DW (a piece of weighting coefficient data DW3) supplied from the memory 14. The post-processing operation section 32 performs a post-processing operation POST3 on an operation result of the convolution operation CONV3, and writes the operation result as a piece of data DM4 to the memory 14. The convolution operation CONV3 and the post-processing operation POST3 correspond to a layer L3. The same applies thereafter. The convolution operation section 31 and the post-processing operation section 32 alternately perform the operations in such a manner.

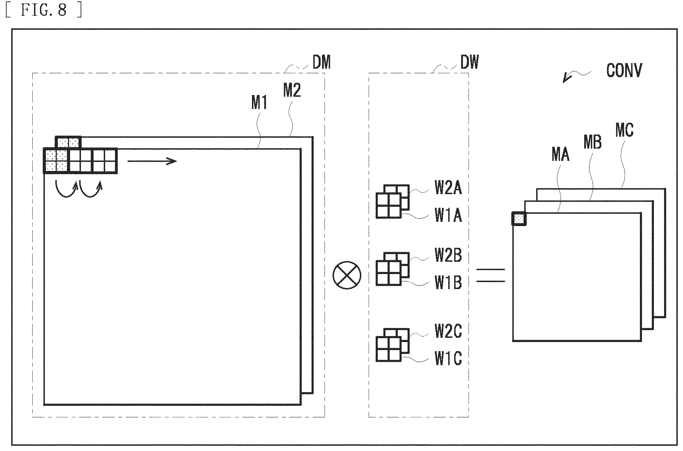

FIG. 8 illustrates an example of the convolution operation CONV. The convolution operation section 31 performs, on the piece of data DM, this convolution operation CONV using the piece of weighting coefficient data DW.

The piece of data DM in this example includes two pieces of map data (pieces of map data M1 and M2). That is, in this example, the piece of data DM includes pieces of data with two channels. The piece of weighting coefficient data DW in this example includes pieces of coefficient data W1A, W2A, W1B, W2B, W1C, and W2C. Each of the pieces of coefficient data W1A, W2A, W1B, W2B, W1C, and W2C is a 2×2 kernel including four (= 2 × 2) pieces of coefficient data. The pieces of coefficient data W1A, W1B, and W1C are associated with the piece of map data M1. The pieces of coefficient data W2A, W2B, and W2C are associated with the piece of map data M2.

In the convolution operation CONV, the convolution operation section 31 performs a convolution operation using the piece of coefficient data W1A on the piece of map data M1, and performs a convolution operation using the piece of coefficient data W2A on the piece of map data M2, thereby generating a piece of map data (a piece of map data MA). Specifically, for example, the convolution operation section 31 first sets a convolution operation region having a size of 2 × 2 at the upper left in each of the pieces of map data M1 and M2. Thereafter, the convolution operation section 31 performs a multiplication of a piece of data (a hatched part) in the convolution operation region of the piece of map data M1 by the piece of coefficient data W1A, performs a multiplication of a piece of data (a hatched part) in the convolution operation region of the piece of map data M2 by the piece of coefficient data W2A, and adds results of these multiplications together, thereby calculating a piece of data (a hatched part) on the far left in an uppermost row in the piece of map data MA. Next, the convolution operation section 31 shifts the convolution operation region in the piece of map data M1 to the right by two. Thereafter, the convolution operation section 31 performs a multiplication of a piece of data in the convolution operation region of the piece of map data M1 by the piece of coefficient data W1A, performs a multiplication of a piece of data in the convolution operation region of the piece of map data M2 by the piece of coefficient data W2A, and adds results of these multiplications together, thereby calculating the second piece of data from the left in the uppermost row in the piece of map data MA. After this, the convolution operation section 31 sequentially changes the convolution operation regions in the pieces of map data M1 and M2, and performs a similar operation. Thus, the convolution operation section 31 generates the piece of map data MA.

In this way, the convolution operation section 31 performs, on the pieces of map data M1 and M2 with two channels, the convolution operation using 2×2 kernels (the pieces of coefficient data W1A, W2A, and W3A) with three channels, thereby generating the piece of map data MA. A size in the lateral direction of the piece of map data MA is a half of a size in the lateral direction of each of the pieces of map data M1 and M2, and a size in the longitudinal direction of the piece of map data MA is a half of a size in the longitudinal direction of each of the pieces of map data M1 and M2. Thus, the size of the piece of map data M is reduced.

Likewise, the convolution operation section 31 performs a convolution operation using the piece of coefficient data W1B on the piece of map data M1, and performs a convolution operation using the piece of coefficient data W2B on the piece of map data M2, thereby generating the piece of map data M (a piece of map data MB). The convolution operation section 31 performs a convolution operation using the piece of coefficient data W1C on the piece of map data M1, and performs a convolution operation using the piece of coefficient data W2C on the piece of map data M2, thereby generating the piece of map data M (a piece of map data MC). Thus, the convolution operation section 31 generates pieces of data with three channels in this example.

The convolution operation section 31 performs such a convolution operation CONV in the operation target region C indicated by the piece of mask data Dmask on the basis of the piece of mask data Dmask. The region setting section 34A of the operation controller 34 updates the piece of mask data Dmask every time the convolution operation section 31 performs the convolution operation CONV.

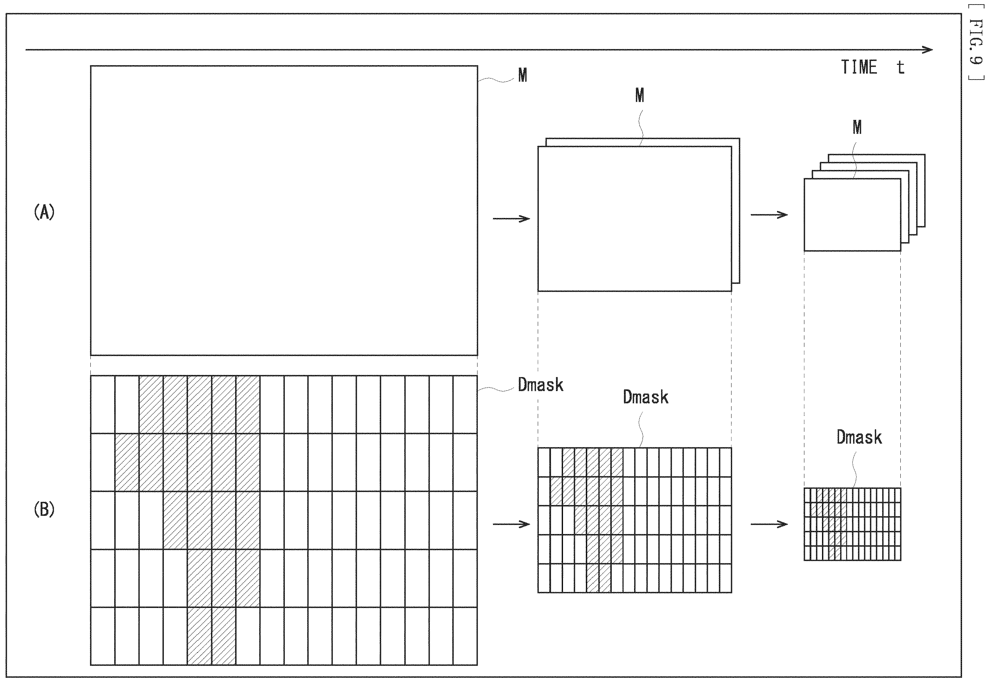

FIG. 9 illustrates an operation example of the region setting section 34A. As described above, the size of the piece of map data M included in the piece of data DM is reduced every time the convolution operation section 31 performs the convolution operation CONV using the piece of weighting coefficient data DW.

For example, in a case where the piece of weighting coefficient data DW is a 2×2 kernel, as illustrated in FIG. 8, the size of the piece of map data M is reduced by half in the lateral direction and reduced by half in the longitudinal direction. In this case, the region setting section 34A combines the flags F in four (2 × 2) segmented regions A in the piece of mask data Dmask into one flag F. This causes the region setting section 34A to reduce the size of the piece of mask data Dmask by half in the lateral direction and by half in the longitudinal direction.

In addition, for example, in a case where the piece of weighting coefficient data DW is a 3×3 kernel, the size of the piece of map data M is reduced to 1/3 in the lateral direction and reduced to 1/3 in the longitudinal direction. In this case, the region setting section 34A combines the flags F in nine (3 × 3) segmented regions A in the piece of mask data Dmask into one flag F. This causes the region setting section 34A to reduce the size of the piece of mask data Dmask to 1/3 in the lateral direction and to 1/3 in the longitudinal direction.

In this way, the region setting section 34A updates the piece of mask data Dmask, which causes the size of the piece of mask data Dmask to be equal to the size of the piece of map data M.

### (About Writing Model Parameter and Operation Parameter to Imaging Device 1)

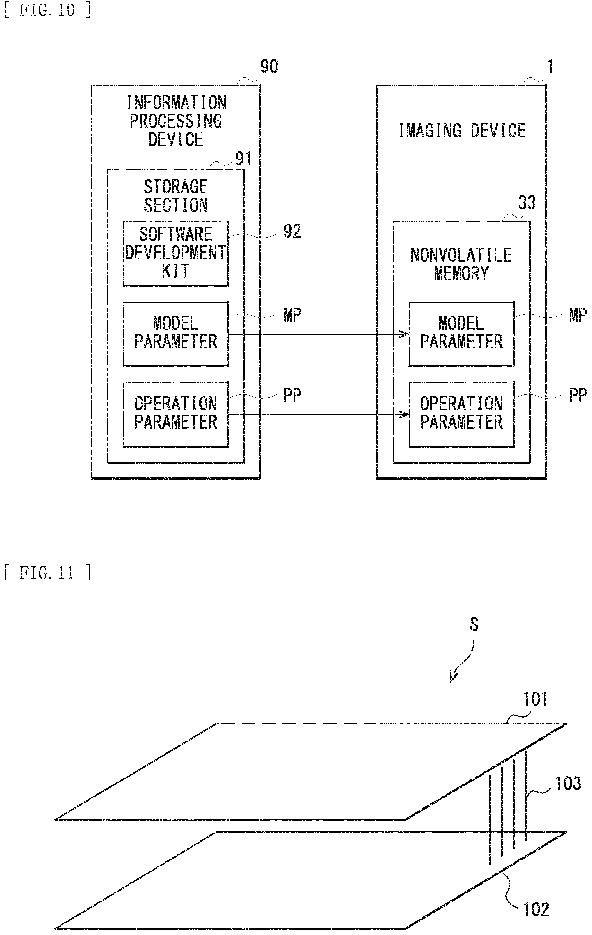

FIG. 10 illustrates an example of writing of the model parameter to the imaging device 1. The model parameter is generated by, for example, an information processing device 90. The information processing device 90 is, for example, a personal computer. A software development kit (SDK) 92 is installed in a storage section 91 of the information processing device 90. The storage section 91 includes, for example, an HDD (Hard Disk Drive) or an SSD (Solid State Drive).

The information processing device 90 executes the software development kit 92 to perform machine learning processing, thereby generating a model parameter MP of the neural network. The model parameter MP is stored in the storage section 91. The model parameter MP includes a plurality of pieces of weighting coefficient data DW (pieces of weighting coefficient data DW1, DW2, DW3, ...) illustrated in FIG. 5, for example.

In addition, the information processing device 90 executes the software development kit 92 to thereby generate an operation parameter PP to be used in an update operation of the piece of mask data Dmask. The operation parameter PP includes operation parameters corresponding to the plurality of respective pieces of weighting coefficient data DW. That is, for example, in a case where a certain piece of weighting coefficient data DW is a 2×2 kernel, an operation parameter corresponding to the certain piece of weighting coefficient data DW is a parameter that causes the region setting section 34A to perform an operation for combining the flags F in four (2 × 2) segmented regions A in the piece of mask data Dmask into one flag F. In addition, for example, in a case where a certain piece of weighting coefficient data DW is a 3×3 kernel, an operation parameter corresponding to the certain piece of weighting coefficient data DW is a parameter that causes the region setting section 34A to perform an operation for combining the flags F in nine (3 × 3) segmented regions A in the piece of mask data Dmask into one flag F. In this way, the information processing device 90 generates the operation parameters corresponding to the plurality of respective pieces of weighting coefficient data DW to thereby generate the operation parameter PP. The operation parameter PP is stored in the storage section 91.

Thereafter, the information processing device 90 writes the model parameter MP and the operation parameter PP as pieces of data to the nonvolatile memory 33 of the imaging device 1. Specifically, the information processing device 90 writes this model parameter MP and this operation parameter PP to the nonvolatile memory 33 with use of a write control command generated by the software development kit 92. This allows the recognition processor 30 of the imaging device 1 to perform recognition processing with use of the model parameter MP and the operation parameter PP.

### (About Implementation of Imaging Device 1)

The imaging device 1 may be formed on one semiconductor substrate, or may be formed on a plurality of semiconductor substrates. An example in which the imaging device 1 is formed on two semiconductor substrates is described in detail below.

FIG. 11 illustrates an implementation example of the imaging device 1. In this example, the imaging device 1 is formed on two semiconductor substrates 101 and 102. The semiconductor substrate 101 is provided on side of an imaging surface S of the imaging device 1, and the semiconductor substrate 102 is provided on side opposite to the imaging surface S of the imaging device 1. The semiconductor substrates 101 and 102 are superimposed on each other. A wiring of the semiconductor substrate 101 and a wiring of the semiconductor substrate 102 are coupled to each other by a coupling section 103. It is possible to use, for example, a through silicon via (TSV: Through Silicon Via), Cu-Cu bonding, a microbump, or the like for the coupling section 103. The imaging device 1 is provided over these two semiconductor substrates 101 and 102.

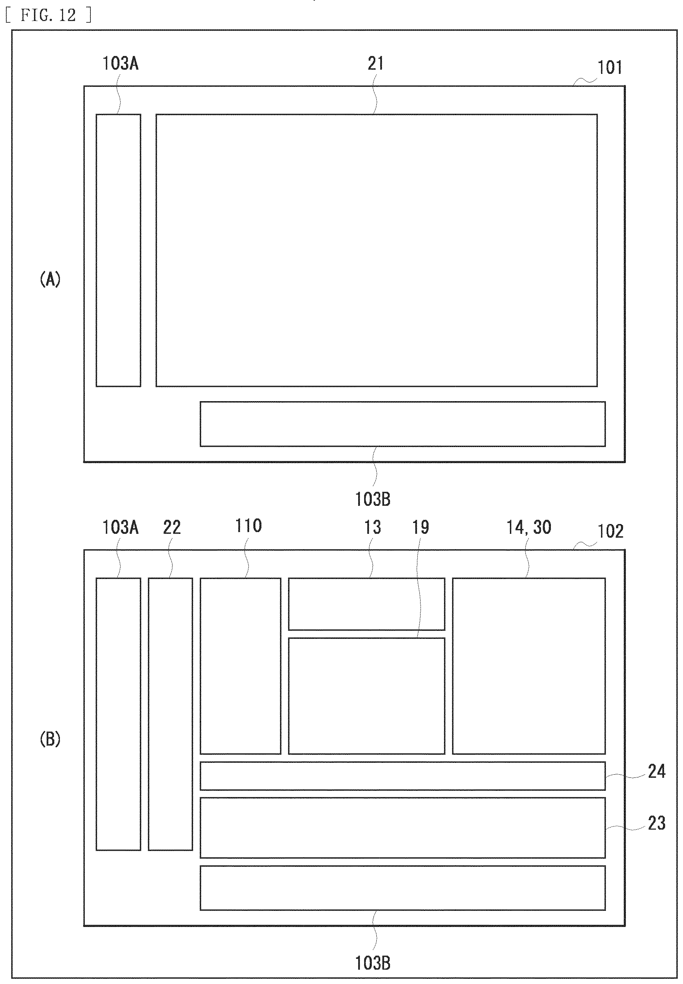

FIG. 12 illustrates a layout example of respective circuits of the imaging device 1 on the semiconductor substrates 101 and 102. The pixel array 21 is provided on the semiconductor substrate 101. The coupling section 103 (coupling sections 103A and 103B) is provided in regions corresponding to each other on the semiconductor substrates 101 and 102. Specifically, the coupling section 103A is provided around left sides of the semiconductor substrates 101 and 102, and the coupling section 103B is provided around lower sides of the semiconductor substrates 101 and 102. A driving section 22 is provided on the right of the coupling section 103A on the semiconductor substrate 102. Accordingly, the driving section 22 generates a control signal, and supplies the control signal to the plurality of light-receiving pixels P of the pixel array 21 via the coupling section 103A on the semiconductor substrates 101 and 102. The AD converter 23 is provided above the coupling section 103B. Accordingly, a pixel signal supplied from the pixel array 21 is supplied to the AD converter 23 via the coupling section 103B on the semiconductor substrates 101 and 102. The horizontal scanner 24 is provided above the AD converter 23. The sensor controller 19 is provided around a middle of the semiconductor substrate 102, and the signal processor 13 is provided above the sensor controller 19. The memory 14 and the recognition processor 30 are provided on the right of the sensor controller 19. The peripheral circuit 110 is another circuit, and is provided on the left of the sensor controller 19 and the signal processor 13. The peripheral circuit 110 includes, for example, a phase locked loop (PLL: Phase Locked Loop), a LDO (Low Drop Out) regulator, a charge pump, or the like.

Here, the region setting section 34A corresponds to a specific example of a "region setting section" in an embodiment of the present disclosure. The piece of mask data Dmask corresponds to a specific example of a "piece of flag data" in an embodiment of the present disclosure. The piece of image data Dpic1 corresponds to a specific example of a "piece of image data" in an embodiment of the present disclosure. The operation target region C corresponds to a specific example of an "operation target region" in an embodiment of the present disclosure. The convolution operation section 31 corresponds to a specific example of a "convolution operation section" in an embodiment of the present disclosure. The piece of weighting coefficient data DW1 corresponds to a specific example of a "piece of first weighting coefficient data" in an embodiment of the present disclosure. The imaging section 11 corresponds to a specific example of a "photodetecting section" in an embodiment of the present disclosure.

### [Operation and Workings]

Next, description is given of operation and workings of the imaging device 1 according to the present embodiment.

### (Overview of Overall Operation)

First, description is given of an overview of an overall operation of the imaging device 1 with reference to FIG. 1. The imaging section 11 performs an imaging operation of imaging a subject, and outputs a result of the imaging as the piece of image data Dpic. The buffer memory 12 temporarily stores the piece of image data Dpic supplied from the imaging section 11. The signal processor 13 generates the piece of image data Dpic1 and the piece of mask data Dmask on the basis of the piece of image data Dpic supplied from the buffer memory 12. The motion detector 13A of the signal processor 13 compares, for example, a latest image with a past image to thereby detect motion of a subject. The memory 14 stores, for example, the piece of image data Dpic1 and the piece of mask data Dmask that are supplied from the signal processor 13. In addition, the memory 14 stores the piece of image data DM and the piece of weighting coefficient data DW that are to be used when the recognition processor 30 performs recognition processing. The recognition processor 30 performs recognition processing using the neural network on the basis of pieces of data stored in the memory 14. The communication section 15 transmits, to the processor 100, a piece of image data and a piece of data indicating a processing result of recognition processing that are supplied from the memory 14. The sensor controller 19 controls operations of the buffer memory 12, the signal processor 13, the memory 14, and the communication section 15.

### (Detailed Operation)

In the recognition processor 30, the convolution operation section 31 performs the convolution operation CONV using the neural network on the basis of an instruction from the operation controller 34. The post-processing operation section 32 performs the predetermined post-processing operation POST including a quantization operation and the like on a result of the operation by the convolution operation section 31 on the basis of an instruction from the operation controller 34. The nonvolatile memory 33 stores the model parameter of the neural network to be used in recognition processing in the recognition processor 30, and the operation parameter to be used in the update operation of the piece of mask data Dmask. The operation controller 34 controls operations of the convolution operation section 31 and the post-processing operation section 32 on the basis of the model parameter supplied from the nonvolatile memory 33 to thereby control recognition processing in the recognition processor 30. The region setting section 34A of the operation controller 34 updates the piece of mask data Dmask on the basis of the operation parameter supplied from the nonvolatile memory 33.

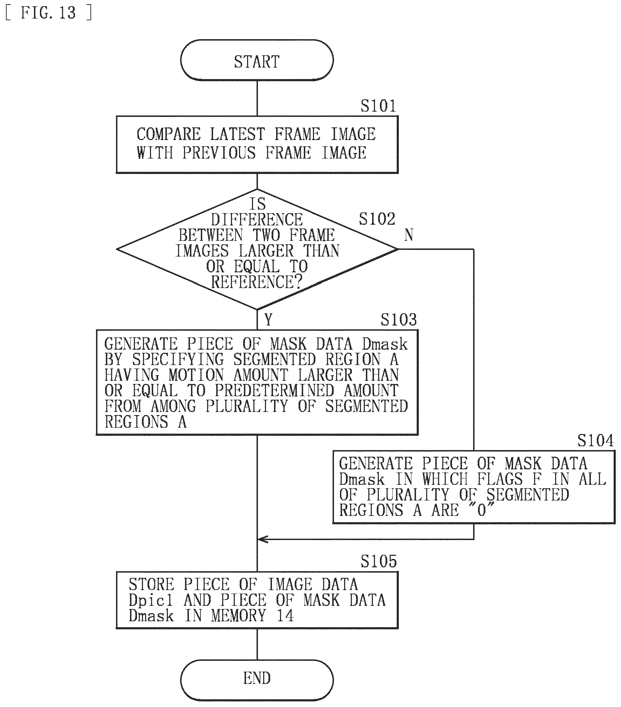

FIG. 13 illustrates an example of an operation of generating the piece of mask data Dmask in the signal processor 13.

First, the motion detector 13A of the signal processor 13 compares a latest frame image with a frame image previous to the latest frame image (step S101).

Next, the motion detector 13A confirms whether or not a difference between two frame images is larger than or equal to a predetermined reference (step S102).

In step S102, in a case where the difference between the two frame image is larger than or equal to the predetermined reference ("Y" in step S102), the motion detector 13A specifies the segmented region A having a motion amount larger than or equal to a predetermined amount from among the plurality of segmented regions A to thereby generate the piece of mask data Dmask (step S103). In this example, the motion detector 13A sets, to "1", the flag F in the segmented region A having a motion amount larger than or equal to the predetermined amount specified from among the plurality of segmented regions A, and sets the flags in the other segmented regions A to "0", thereby generating the piece of mask data Dmask.

In step S102, in a case where the difference between the two frame images is not larger than or equal to the predetermined reference ("N" in step S102), the motion detector 13A generates the piece of mask data Dmask in which the flags F in all the plurality of segmented regions A are "0" (step S104).

Thereafter, the signal processor 13 stores the piece of image data Dpic1, and the generated piece of mask data Dmask in the memory 14 (step S105).

This is the end of this flow. The recognition processor 30 performs recognition processing using the neural network on the basis of these pieces of data stored in the memory 14.

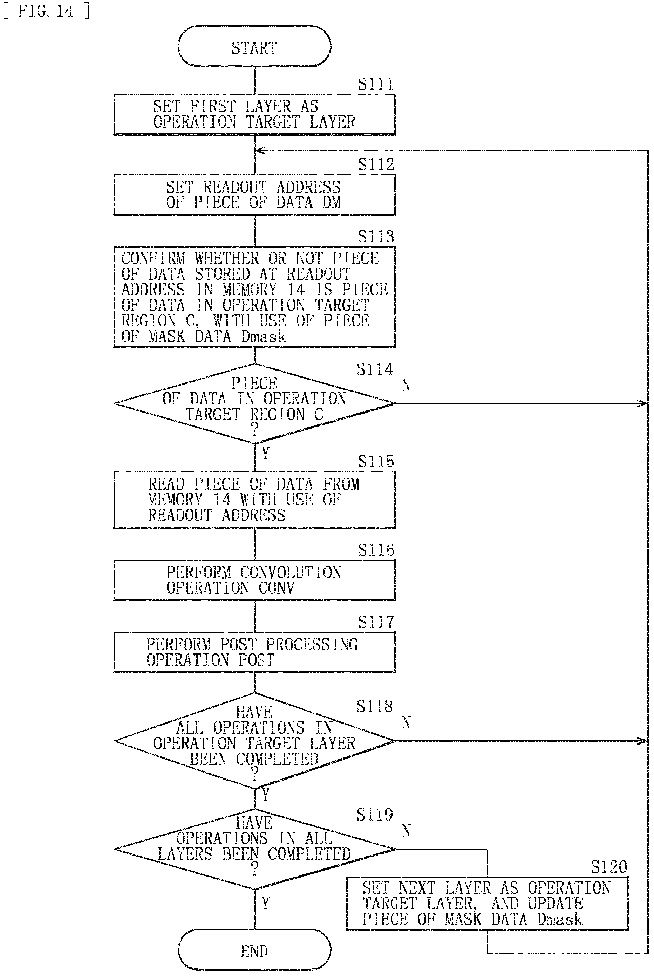

FIG. 14 illustrates an operation example of the recognition processor 30.

First, the operation controller 34 sets a first layer as an operation target layer (step S111).

Next, the operation controller 34 sets a readout address of a piece of data included in the piece of data DM to be used in a convolution operation (step S112).

Next, the operation controller 34 reads the piece of mask data Dmask from the memory 14, and confirms whether or not the piece of data stored at the readout address in the memory 14 is a piece of data in the operation target region C, with use of this piece of mask data Dmask (step S113). In a case where the piece of data is not the piece of data in the operation target region C ("N" in step S114), processing returns to step S112.

In step S114, in a case where the piece of data is the piece of data in the operation target region C ("Y" in step S114), the recognition processor 30 reads the piece of data from the memory 14 with use of the set readout address (step S115).

Next, the convolution operation section 31 performs the convolution operation CONV (step S116). Specifically, the convolution operation section 31 reads the piece of weighting coefficient data DW from the memory 14, and performs the convolution operation CONV on the piece of data read in the step S115 with use of this piece of weighting coefficient data DW. Thus, the convolution operation section 31 performs the convolution operation CONV on the piece of data in the operation target region C.

Next, the post-processing operation section 32 performs the post-processing operation POST (step S117). Specifically, the post-processing operation section 32 performs a predetermined post-processing operation POST including a quantization operation and the like on a result of the operation by the convolution operation section 31. Thereafter, the post-processing operation section 32 stores a result of processing as the piece of data DM in the memory 14.

Next, the operation controller 34 confirms whether or not all operations in the set operation target layer have been completed (step S118). In a case where all the operations in the operation target layer have not yet been completed ("N" in step S118), the processing returns to step S112. The recognition processor 30 repeats processing from step S112 to step S118 until all operations in the set operation target layer have been completed. In this way, the recognition processor 30 performs the convolution operation CONV on the piece of data in the operation target region C in the operation target layer, and performs the post-processing operation POST on the basis of an operation result of the convolution operation CONV.

In step S118, in a case where all the operations in the operation target layer have been completed ("Y" in step S118), the operation controller 34 confirms whether or not operations in all layers have been completed (step S119).

In step S119, in a case where the operations in all the layers have not yet been completed ("N" in step S119), the operation controller 34 sets the next layer as the operation target layer, and updates the piece of mask data Dmask (step S120). The region setting section 34A updates the piece of mask data Dmask on the basis of the operation parameter supplied from the nonvolatile memory 33. Accordingly, for example, as illustrated in FIG. 9, the size of the piece of mask data Dmask becomes equal to the size of the piece of map data M. Thereafter, the processing returns to step S112. The recognition processor 30 repeats processing from step S112 to step S120 until the operations in all the layers have been completed.

In step S119, in a case where the operations in all the layers have been completed ("Y" in step S119), this flow ends.

Next, description is given of an operation of the region setting section 34A.

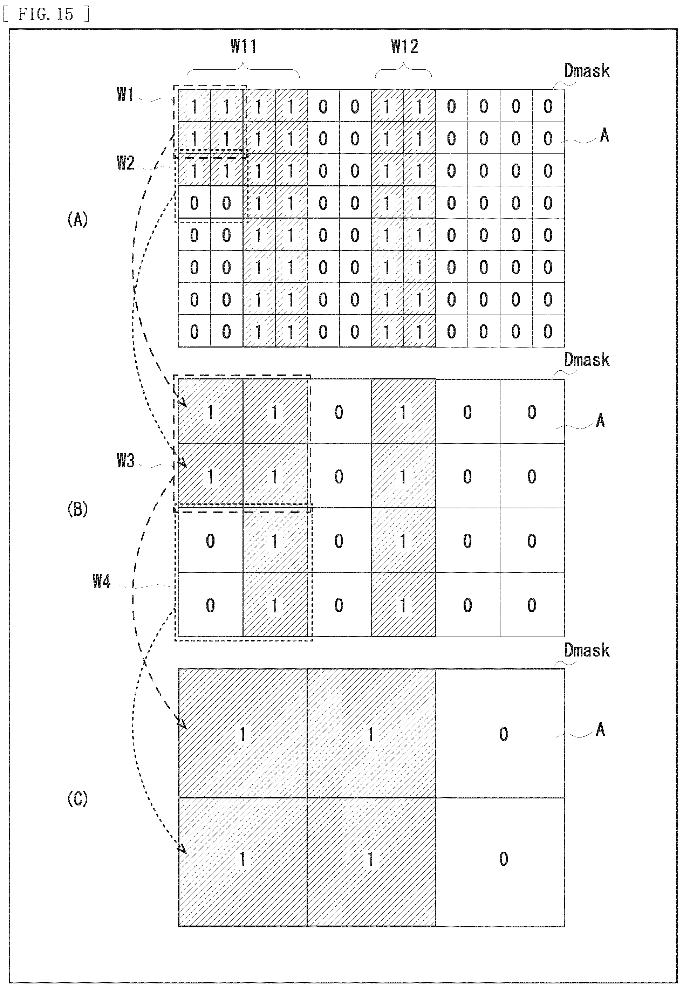

FIG. 15 illustrates an operation example of the region setting section 34A, where (A) illustrates an example of the piece of mask data Dmask in a certain layer, (B) illustrates an example of the piece of mask data Dmask in a layer next to the certain layer, and (C) illustrates the piece of mask data Dmask in a layer after the next layer. In this example, the piece of mask data Dmask is a piece of data illustrated in FIG. 6. As illustrated in FIG. 8, the convolution operation section 31 performs the convolution operation CONV using a 2×2 kernel. Accordingly, as illustrated in FIG. 8, the size of the piece of map data M is reduced by half in the lateral direction and reduced by half in the longitudinal direction. In this case, the region setting section 34A combines the flags F in four (2 × 2) segmented regions A in the piece of mask data Dmask into one flag F. This causes the region setting section 34A to reduce the size of the piece of mask data Dmask by half in the lateral direction and by half in the longitudinal direction. For description convenience, the size of the piece of mask data Dmask illustrated in FIG. 15 is the same; therefore, the size of the segmented region A is relatively doubled in the lateral direction and doubled in the longitudinal direction at each time of progressing through one layer.

For example, in the piece of mask data Dmask illustrated in (A) of FIG. 15, the flags F in four segmented regions A in a region W1 are all "1". Accordingly, the region setting section 34A sets the flag F to "1" in the segmented region A at the upper left corresponding to this region W1 in the piece of mask data Dmask ((B) of FI. 15) in the next layer. In addition, in four segmented regions A in a region W2 in the piece of mask data Dmask illustrated in (A) of FIG. 15, two flags F are "1", and the remaining two flags F are "0". In this example, in a case where there are two or more segmented regions A in which the flag F is "1" among the four segmented regions A, the region setting section 34A sets the flag F in one segmented region A corresponding to the four segmented regions A in the next layer to "1". Accordingly, in this example, the region setting section 34A sets the flag F in the segmented region A corresponding to this region W2 in the piece of mask data Dmask in the next layer ((B) of FIG. 15) to "1". That is.

It is to be noted that a method of generating one flag F by combining four flags in four segmented regions A is not limited to the method described above. For example, in a case where there are three or more segmented regions A in which the flag F is "1" among the four segmented regions A, the region setting section 34A may set the flag F in one segmented region A corresponding to the four segmented regions A in the next layer to "1". In addition, only in a case where the flags F in four segmented regions A are all "1", the region setting section 34A may set the flag F in one segmented region A corresponding to the four segmented regions A in the next layer to "1". This method may be set by a user, or may be set by machine learning when the information processing device 90 performs machine learning of a model parameter.

Likewise, for example, in the piece of mask data Dmask illustrated in (B) of FIG. 15, the flags F in four segmented regions A in a region W3 are all "1". Accordingly, the region setting section 34A sets the flag F in the segmented region A at the upper left corresponding to the region W3 in the piece of mask data Dmask ((C) of FI. 15) in the next layer to "1". In addition, in four segmented regions A in a region W4 in the piece of mask data Dmask illustrated in (B) of FIG. 15, two flags F are "1", and the remaining two flags F are "0". Accordingly, in this example, the region setting section 34A sets the flag F to "1" in the segmented region A corresponding to the region W4 in the piece of mask data Dmask in the next layer ((C) of FIG. 15).

In this way, the region setting section 34A updates the piece of mask data Dmask. In the piece of mask data Dmask illustrated in (A) of FIG. 15, in two portions W11 and W12, the flags F are "1". The region setting section 34A repeats the update operation of the piece of mask data Dmask, thereby making it possible to combine regions in which the flags F are "1" into one region, as illustrated in (C) of FIG. 15.

The region setting section 34A performs such update processing on the piece of mask data Dmask with use of a dedicated command set in the microcontroller. This allows the region setting section 34A to perform update processing on the piece of mask data Dmask in one cycle, for example. If the region setting section 34A performs update processing on the piece of mask data Dmask with use of a basic logical operation command set in the microcontroller, there is a possibility that the operation amount increases because a plurality of commands is executed. For example, preparing the dedicated command set makes it possible for the region setting section 34A to efficiently perform operation processing.

Thus, the imaging device 1 includes the region setting section 34A and the convolution operation section 31. The region setting section 34A is configured to set the operation target region C on the basis of the piece of mask data Dmask indicating a region to be processed and a region not to be processed in an image region indicated by the piece of image data Dpic1. The operation target region C is an image region that has to be processed in the image region indicated by the piece of image data. The convolution operation section 31 is configured to perform the convolution operation CONV in the operation target region C on the basis of the piece of image data Dpic and a piece of first weighting coefficient data (the piece of weighting coefficient data DW1). Accordingly, in the imaging device 1, it is possible to reduce an operation amount. That is, for example, in a case where the region setting section 34A is not provided and the convolution operation is performed in all image regions, the operation amount increases, which increases power consumption. The imaging device 1 includes the region setting section 34A that is configured to set the operation target region C, and the convolution operation section 31 performs the convolution operation in this operation target region C, which makes it possible to perform the convolution operation only in the operation target region C. Accordingly, it is possible to reduce the operation amount and it is possible to reduce power consumption.

In addition, in the imaging device 1, the region setting section 34A is configured to update the operation target region C on the basis of the operation parameter associated with the piece of first weighting coefficient data (the piece of weighting coefficient data DW1), and the convolution operation section 31 is configured to further perform the convolution operation CONV in the updated operation target region C on the basis of an operation result of the previous convolution operation CONV and a piece of second weighting coefficient data (the piece of weighting coefficient data DW1). Accordingly, the convolution operation section 31 is configured to perform the convolution operation in the updated operation target region C also in the second layer. This makes it possible to reduce the operation amount, and makes it possible to reduce power consumption.

In addition, in the imaging device 1, the piece of mask data Dmask includes a piece of map data corresponding to the piece of image data Dpic1, and resolution of the piece of mask data Dmask is lower than resolution of the piece of image data Dpic1. This makes it possible to reduce an amount of data to be handled, for example, as compared with a case where the resolution of the piece of mask data Dmask is high, which makes it possible to simplify processing, and makes it possible to effectively perform the convolution operation.

In addition, in the imaging device 1, the imaging section 11 is provided that is configured to perform an imaging operation, and motion of a subject is detectable on the basis of a result of imaging by the imaging section 11, and it is possible to generate the piece of mask data Dmask on the basis of the motion of the subject. This makes it possible to set, for example, an image region in which the subject is moving as the operation target region in the image region indicated by the piece of image data, which makes it possible to effectively perform recognition processing.

### [Effects]

As described above, in the present embodiment, a region setting section and a convolution operation section are included. The region setting section is configured to set an operation target region on the basis of a piece of mask data that indicates a region to be processed and a region not to be processed in an image region indicated by a piece of image data. The operation target region is an image region that has to be processed in the image region indicated by the piece of image data The convolution operation section is configured to perform a convolution operation in the operation target region C on the basis of the piece of image data and the piece of first weighting coefficient data. Accordingly, it is possible to reduce an operation amount.

In the present embodiment, the region setting section is configured to update the operation target region on the basis of an operation parameter associated with the piece of first weighting coefficient data, and the convolution operation section is configured to further perform the convolution operation in the updated operation target region on the basis of an operation result of the previous convolution operation and the piece of second weighting coefficient data, which makes it possible to reduce the operation amount.

In the present embodiment, the piece of mask data includes a piece of map data corresponding to the piece of image data, and resolution of the piece of mask data is lower than resolution of the piece of image data. This makes it possible to reduce an amount of data to be handled, for example, as compared with a case where the resolution of the piece of mask data is high, which makes it possible to simplify processing, and makes it possible to effectively perform the convolution operation.

In the present embodiment, an imaging section is provided that is configured to perform an imaging operation, and motion of a subject is detectable on the basis of a result of imaging by the imaging section, and it is possible to generate the piece of mask data on the basis of the motion of the subject. This makes it possible to set, for example, an image region in which the subject is moving as the operation target region in the image region indicated by the piece of image data, which makes it possible to effectively perform recognition processing.

### [Modification Example 1]

In the embodiment described above, as illustrated in FIG. 14, the piece of data in the operation target region C of the piece of data DM is read from the memory 14, but this is not limitative. Instead of this, for example, all pieces of data in the piece of data DM may be read from the memory 14, and the convolution operation section 31 may perform the convolution operation on the piece of data in the operation target region C among the read pieces of data. Specifically, the operation controller 34 is configured to give an invalidity instruction to the convolution operation section 31 so as not to perform the convolution operation on pieces of data in regions other than the operation target region C.

### [Modification Example 2]

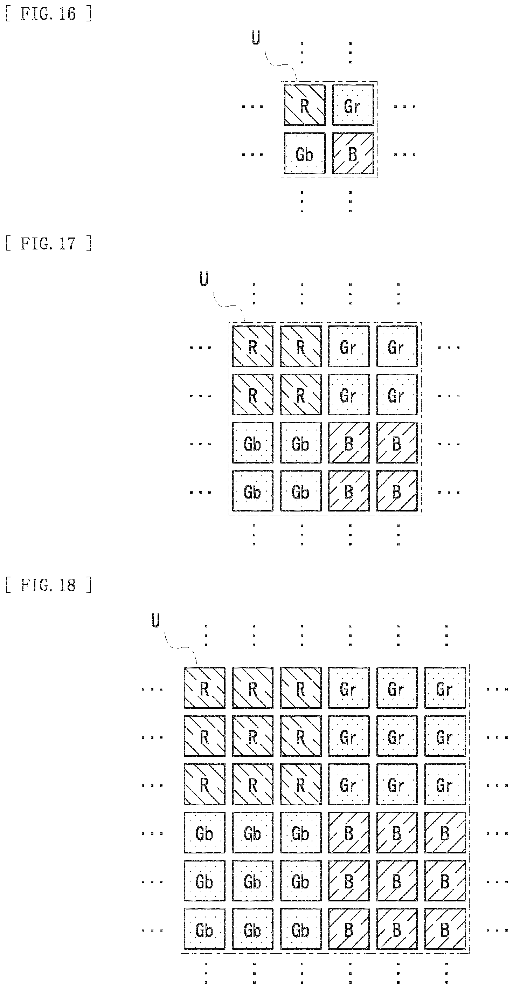

In the embodiment described above, as illustrated in FIG. 16, the plurality of light-receiving pixels P in the pixel array 21 is arranged in units U of four light-receiving pixels P including the light-receiving pixel P provided with the red (R) color filter, the light-receiving pixels P provided with the green (Gr and Gb) color filters, and the light-receiving pixel P provided with the blue (B) color filter, but this is not limitative. The present modification example is described in detail below.

FIG. 17 illustrates a configuration example of the unit U according to the present modification example. In this pixel array 21, the plurality of light-receiving pixels P is arranged in units U of sixteen light-receiving pixels P. The sixteen light-receiving pixels P in the unit U are arranged in four rows and four columns. In this unit U, the light-receiving pixels P provided with the red (R) color filters are arranged in two rows and two columns at the upper left, the light-receiving pixels P provided with the green (Gr) color filters are arranged in two rows and two column at the upper right, the light-receiving pixels P provided with the green (Gb) color filters are arranged in two rows and two columns at the lower left, and the light-receiving pixels P provided with the blue (B) color filters are arranged in two rows and two columns at the lower right.

FIG. 18 illustrates a configuration example of the unit U according to the present modification example. In this pixel array 21, the plurality of light-receiving pixels P is arranged in units U of thirty six light-receiving pixels P. The thirty six light-receiving pixels in the unit U are arranged in six rows and six columns. In the unit U, the light-receiving pixels P provided with the red (R) color filters are arranged in three rows and three columns at the upper left, the light-receiving pixels P provided with the green (Gr) color filters are arranged in three rows and three column at the upper right, the light-receiving pixels P provided with the green (Gb) color filters are arranged in three rows and three columns at the lower left, and the light-receiving pixels P provided with the blue (B) color filters are arranged in three rows and three columns at the lower right.

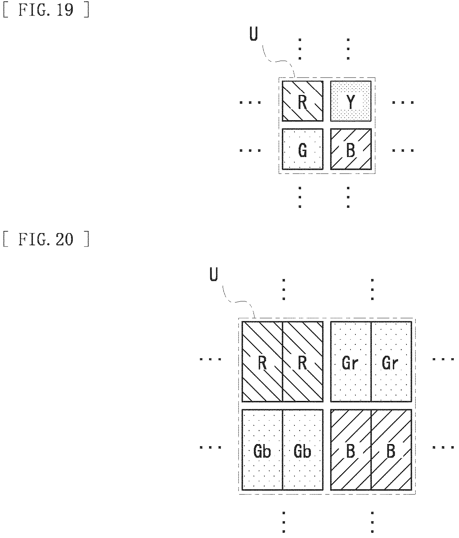

FIG. 19 illustrates a configuration example of the unit U according to the present modification example. In this pixel array 21, the plurality of light-receiving pixels P is arranged in units U of four light-receiving pixels P. The four light-receiving pixels P in the unit U are arranged in two rows and two columns. In this unit U, the light-receiving pixel P provided with the red (R) color filter is provided at the upper left, the light-receiving pixel P provided with a yellow (Y) color filter is provided at the upper right, the light-receiving pixel P provided with a green (G) color filter is provided at the lower left, and the light-receiving pixel P provided with the blue (B) color filter is provided at the lower right. The yellow (Y) color filter is what is called a complementary color filter.

FIG. 20 illustrates a configuration example of the unit U according to the present modification example. In this pixel array 21, a pixel pair including two light-receiving pixels P provided with the red (R) color filters is provided at the upper left, a pixel pair including two light-receiving pixels P provided with the green (Gr) color filters is provided at the upper right, a pixel pair including two light-receiving pixels P provided with the green (Gb) color filters is provided at the lower left, and a pixel pair including two light-receiving pixels P provided with the blue (B) color filters is provided at the lower right. The two light-receiving pixels P included in the pixel pair are what is called phase-difference pixels. One on-chip lens is provided for these two light-receiving pixels P. Accordingly, in the two light-receiving pixels P, images are shifted from each other. Thus, in the imaging device 1, it is possible to generate the piece of image data Dpic, and also generate a piece of phase-difference data on the basis of what is called an image plane phase difference detected by a plurality of pixel pairs.

### [Modification Example 3]

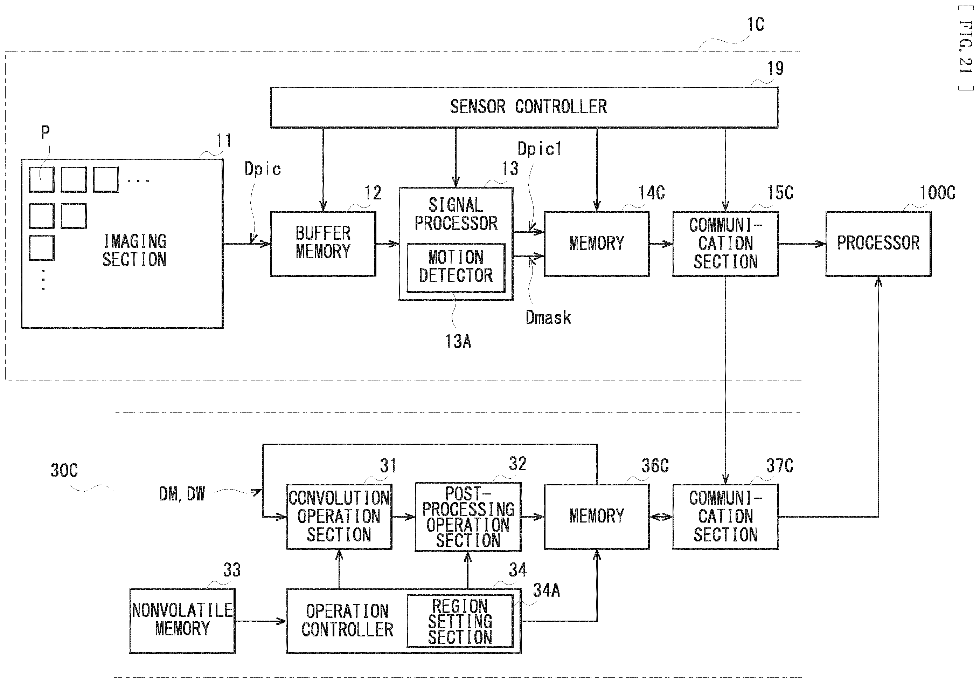

In the embodiment described above, the recognition processor 30 is provided in the imaging device 1, but this is not limitative. For example, as illustrated in FIG. 21, a recognition processor may be provided separately from the imaging device 1. This system includes an imaging device 1C, a recognition processing device 30C, and a processor 100C.

The imaging device 1C includes the imaging section 11, the buffer memory 12, the signal processor 13, a memory 14C, a communication section 15C, and the sensor controller 19. The memory 14C is configured to store, for example, the piece of image data Dpic1 and the piece of mask data Dmask that are supplied from the signal processor 13. The communication section 15C is configured to transmit the piece of image data Dpic1 supplied from the memory 14C to the processor 100C and transmit, to the recognition processing device 30C, the piece of image data Dpic1 and the piece of mask data Dmask that are supplied from the memory 14C.

The recognition processing device 30C includes the convolution operation section 31, the post-processing operation section 32, the nonvolatile memory 33, the operation controller 34, a memory 36C, and a communication section 37C. The memory 36C is configured to store the piece of image data Dpic1 and the piece of mask data Dmask that are supplied from the imaging device 1C, and the piece of data DM and the piece of weighting coefficient data DW that are to be used when the recognition processor 30 performs recognition processing. The communication section 37C is configured to receive the piece of image data Dpic1 and the piece of mask data Dmask that are transmitted from the imaging device 1C, and supply this piece of image data Dpic1 and this piece of mask data Dmask to the memory 36C and transmit, to the processor 100C, a piece of data indicating a processing result of the recognition processing supplied from the memory 14C.

The processor 100C is configured to perform predetermined processing on the basis of the piece of image data supplied from the imaging device 1C and the processing result of the recognition processing supplied from the recognition processing device 30C.

### [Modification Example 3]

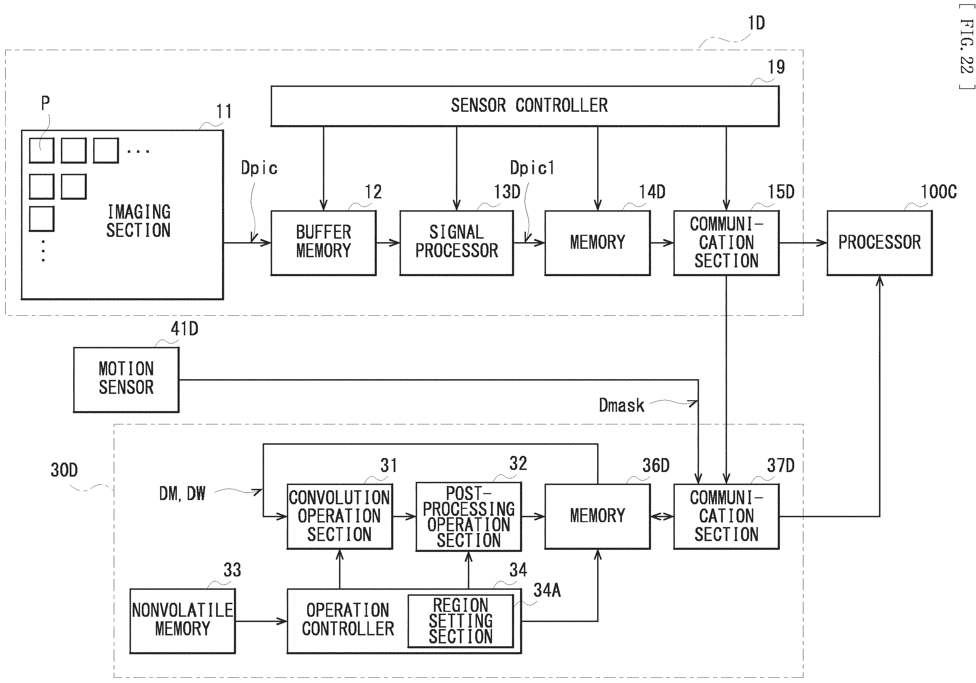

In the embodiment described above, the motion detector 13A of the signal processor 13 detects motion of the subject on the basis of the piece of image data Dpic, but this is not limitative. Instead of this, for example, as illustrated in FIG. 22, another sensor may detect motion. This system includes an imaging device 1D, a motion sensor 41D, a recognition processing device 30D, and the processor 100C.

The imaging device 1D includes a signal processor 13D, a memory 14D, and a communication section 15D. The signal processor 13D is configured to generate the piece of image data Dpic1 on the basis of the piece of image data Dpic supplied from the buffer memory 12, That is, unlike the signal processor 13 according to the embodiment described above, the signal processor 13D does not include the motion detector 13A. The memory 14D is configured to store, for example, the piece of image data Dpic1 supplied from the signal processor 13D. The communication section 15D is configured to transmit the piece of image data Dpic1 supplied from the memory 14D to the processor 100C and the recognition processing device 30D.

The motion sensor 41D is configured to detect motion of the subject of the imaging device 1D. As with the imaging device 1 according to the embodiment described above, the motion sensor 41D may include an imaging section, and may detect motion of the subject on the basis of a captured image. In addition, the motion sensor 41D may include what is called a dynamic vision sensor that detects an event in pixel units, and may detect motion of the subject on the basis of a result of detection by the sensor. In addition, the motion sensor 41D may include, for example, a thermography sensor, and may detect motion of the subject on the basis of a result of detection by the sensor. The motion sensor 41D sets the flag F to "1" in the segmented region A in which the subject is moving among the plurality of segmented regions A, and sets the flag F to "0" in the segmented region A in which no subject is moving among the plurality of segmented regions A. Thereafter, the motion sensor 41D generates the piece of mask data Dmask including the piece of map data about the flags F in the plurality of segmented regions A.

The recognition processing device 30D includes a memory 36D and a communication section 37D. The memory 36D is configured to store the piece of image data Dpic1 supplied from the imaging device 1D, the piece of mask data Dmask supplied from the motion sensor 41D, and the piece of data DM and the piece of weighting coefficient data DW that are to be used when the recognition processing device 30D performs recognition processing. The communication section 37D is configured to receive the piece of image data Dpic1 transmitted from the imaging device 1D, and the piece of mask data Dmask supplied from the motion sensor 41D, and supply this piece of image data Dpic1 and this piece of mask data Dmask to the memory 36D and transmit, to the processor 100C, a piece of data indicating a processing result of the recognition processing supplied from the memory 14D.

### [Modification Example 3]

In the embodiment described above, the piece of mask data Dmask is generated on the basis of motion of the subject, but this is not limitative. Instead of this, the piece of mask data Dmask may be generated on the basis of information other than motion of the subject. The present modification example is described in detail below with reference to some examples.

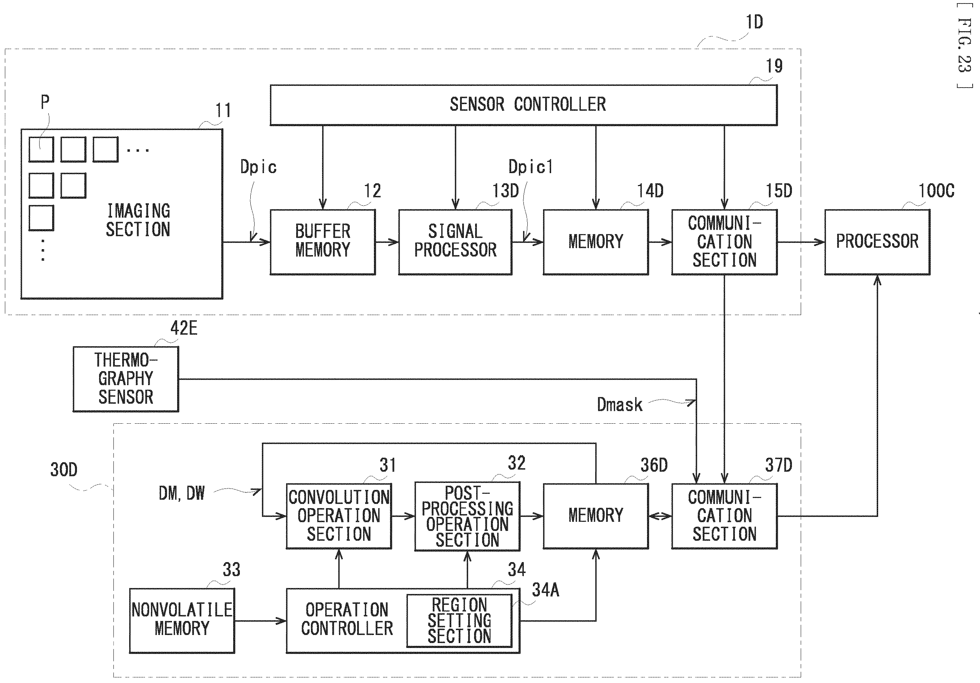

FIG. 23 illustrates an example of a system according to the present modification example. This system includes the imaging device 1D, a thermography sensor 42E, the recognition processing device 30D, and the processor 100C.

The thermography sensor 42E is configured to detect a temperature of the subject of the imaging device 1D. The thermography sensor 42E sets the flag F to "1" in the segmented region A in which the temperature of the subject is higher than or equal to a predetermined temperature among the plurality of segmented regions A, and sets the flag F to "0" in the segmented region A in which the temperature of the subject is lower than the predetermined temperature among the plurality of segmented regions A. Thereafter, the thermography sensor 42E generates the piece of mask data Dmask including the piece of map data about the flags F in the plurality of segmented regions A. Accordingly, the recognition processing device 30D is configured to perform recognition processing on the subject having a temperature higher than or equal to the predetermined temperature.

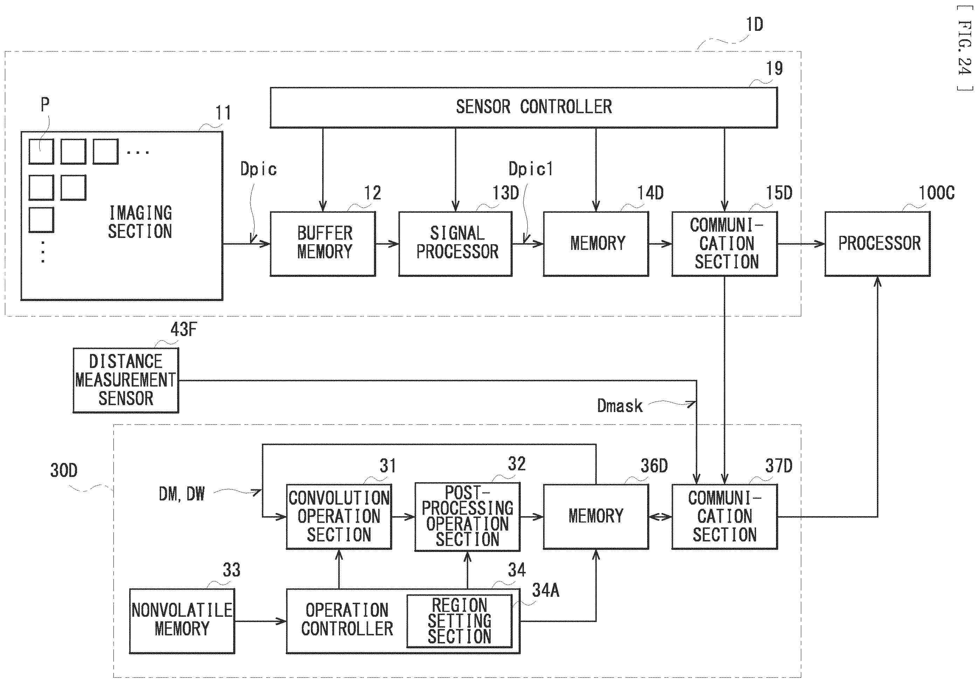

FIG. 24 illustrates an example of another system according to the present modification example. This system includes the imaging device 1D, a distance measurement sensor 43F, the recognition processing device 30D, and the processor 100C.

The distance measurement sensor 43F is configured to detect a distance to the subject of the imaging device 1D. The distance measurement sensor 43F is, for example, a ToF (Time of Flight) sensor. The distance measurement sensor 43F sets the flag F to "1" in the segmented region A in which the distance to the subject is shorter than a predetermined distance among the plurality of segmented regions A, and sets the flag F to "0" in the segmented region A in which the distance to the subject is longer than the predetermined distance among the plurality of segmented regions A. Thereafter, the distance measurement sensor 43F generates the piece of mask data Dmask including the piece of map data about the flags F in the plurality of segmented regions A. This allows the recognition processing device 30D to perform recognition processing on the subject located at a distance closer to the predetermined distance.

### [Other Modification Examples]

In addition, two or more of these modification examples may be combined.

Although the present technology has been described above with reference to some embodiments and some modification examples, the present technology is not limited to these embodiments and the like, and may be modified in a variety of ways.

For example, in each embodiment described above, the flag F in the segmented region A in which the subject is moving is set to " 1", and the flag F in the segmented region A in which no subject is moving is set to "0", but this is not limitative. Instead of this, for example, the flag F in the segmented region A in which the subject is moving may be set to "0", and the flag F in the segmented region A in which no subject is moving may be set to "1".

It is to be noted that the effects described herein are merely illustrative and non-limiting, and may further include other effects.

It is to be noted that the present technology may have the following configurations. According to the present technology having the following configurations, it is possible to reduce power consumption.
(1) An image processing device including:
   a region setting section that is configured to set an operation target region on the basis of a piece of flag data that indicates a region to be processed and a region not to be processed in an image region indicated by a piece of image data, the operation target region being an image region that has to be processed in the image region indicated by the piece of image data; and
   a convolution operation section that is configured to perform a convolution operation in the operation target region on the basis of the piece of image data and a piece of first weighting coefficient data.
(2) The image processing device according to (1), in which
   the region setting section is configured to update the operation target region on the basis of an operation parameter associated with the piece of first weighting coefficient data, and
   the convolution operation section is configured to further perform the convolution operation in the updated operation target region on the basis of an operation result of the previous convolution operation and a piece of second weighting coefficient data.
(3) The image processing device according to (2), in which
   the convolution operation section and the region setting section are configured by a microcontroller, and
   the microcontroller has a command set about an operation of updating the operation target region by the region setting section.
(4) The image processing device according to any one of (1) to (3), in which
   the piece of flag data includes a piece of map data corresponding to the piece of image data, and
   resolution of the piece of flag data is lower than resolution of the piece of image data.
(5) The image processing device according to any one of (1) to (4), in which the image processing device is configured to perform neural network operation processing.
(6) The image processing device according to any one of (1) to (5), further including:
   an imaging section that is configured to perform an imaging operation; and
   a flag data generator that is configured to detect motion of a subject on the basis of a result of imaging by the imaging section, and is configured to generate the piece of flag data on the basis of the motion of the subject.
(7) The image processing device according to (6), in which
   the imaging section is provided on a first semiconductor substrate, and
   the flag data generator, the region setting section, and the convolution operation section are provided on a second semiconductor substrate superimposed on the first semiconductor substrate.
(8) The image processing device according to any one of (1) to (5), further including a sensor that is configured to generate the piece of flag data.
(9) The image processing device according to (8), in which the sensor is configured to detect motion of a subject, and is configured to generate the piece of flag data on the basis of the motion of the subject.
(10) The image processing device according to (8), in which the sensor is configured to detect a temperature of a subject, and is configured to generate the piece of flag data on the basis of the temperature of the subject.
(11) The image processing device according to (8), in which the sensor is configured to detect a distance to a subject, and is configured to generate the piece of flag data on the basis of the distance to the subject.

The present application claims the benefit of Japanese Priority Patent Application JP2022-132956 filed with the Japan Patent Office on August 24, 2022, the entire contents of which are incorporated herein by reference.

It should be understood by those skilled in the art that various modifications, combinations, sub-combinations, and alterations may occur depending on design requirements and other factors insofar as they are within the scope of the appended claims or the equivalents thereof.

## Claims

1. An image processing device comprising:
a region setting section that is configured to set an operation target region on a basis of a piece of flag data that indicates a region to be processed and a region not to be processed in an image region indicated by a piece of image data, the operation target region being an image region that has to be processed in the image region indicated by the piece of image data; and
a convolution operation section that is configured to perform a convolution operation in the operation target region on a basis of the piece of image data and a piece of first weighting coefficient data.

2. The image processing device according to claim 1, wherein
the region setting section is configured to update the operation target region on a basis of an operation parameter associated with the piece of first weighting coefficient data, and
the convolution operation section is configured to further perform the convolution operation in the updated operation target region on a basis of an operation result of the previous convolution operation and a piece of second weighting coefficient data.

3. The image processing device according to claim 2, wherein
the convolution operation section and the region setting section are configured by a microcontroller, and
the microcontroller has a command set about an operation of updating the operation target region by the region setting section.

4. The image processing device according to claim 1, wherein
the piece of flag data comprises a piece of map data corresponding to the piece of image data, and
resolution of the piece of flag data is lower than resolution of the piece of image data.

5. The image processing device according to claim 1, wherein the image processing device is configured to perform neural network operation processing.

6. The image processing device according to claim 1, further comprising:
an imaging section that is configured to perform an imaging operation; and
a flag data generator that is configured to detect motion of a subject on a basis of a result of imaging by the imaging section, and is configured to generate the piece of flag data on a basis of the motion of the subject.

7. The image processing device according to claim 6, wherein
the imaging section is provided on a first semiconductor substrate, and
the flag data generator, the region setting section, and the convolution operation section are provided on a second semiconductor substrate superimposed on the first semiconductor substrate.

8. The image processing device according to claim 1, further comprising a sensor that is configured to generate the piece of flag data.

9. The image processing device according to claim 8, wherein the sensor is configured to detect motion of a subject, and is configured to generate the piece of flag data on a basis of the motion of the subject.

10. The image processing device according to claim 8, wherein the sensor is configured to detect a temperature of a subject, and is configured to generate the piece of flag data on a basis of the temperature of the subject.

11. The image processing device according to claim 8, wherein the sensor is configured to detect a distance to a subject, and is configured to generate the piece of flag data on a basis of the distance to the subject.
